# EUROPEAN PATENT SPECIFICATION

(11) **EP 2 865 462 B1**
(45) Date of publication and mention of the grant of the patent: **23.11.2016**
(21) Application number: 13807641.9
(22) Date of filing: 30.05.2013
(51) Int. Cl.: B22D 17/32, B29C 45/53, B22D 17/10, B22D 17/20, B29C 45/82, B22D 21/00

(54) **INJECTION DEVICE**
INJEKTIONSVORRICHTUNG
DISPOSITIF D'INJECTION

(30) Priority: 21.06.2012 JP 2012139271
(43) Date of publication of application: 29.04.2015
(73) Proprietor: Kabushiki Kaisha Toyota Jidoshokki, Kariya-shi, Aichi 448-8671 (JP)
(72) Inventor: YAMAGUCHI, Kazuyuki, Kariya-shi Aichi 448-8671 (JP); FUNAHASHI, Kazuki, Kariya-shi Aichi 448-8671 (JP)
(74) Representative: TBK
(86) International application number: PCT/JP2013/065009
(87) International publication number: WO 2013/190971

(56) References cited:
- WO-A1-2013/005598
- JP-A- H0 871 725
- JP-A- H0 947 856
- JP-U- H02 148 766

## Description

### TECHNICAL FIELD

The present invention relates to an injection apparatus.

### BACKGROUND ART

Injection apparatuses are known as an apparatus that injects a molding material into a mold and fills the mold with the molding material to form a desired product. As in the injection apparatus disclosed in Patent Document 1, for example, recent injection apparatuses apply actuating force to an injection cylinder by using an electric motor. The injection apparatus of Patent Document 1 includes an injection cylinder device for actuating an injection plunger to inject a molding material into a mold, and a conversion cylinder device for supplying hydraulic oil to the injection cylinder device. In the injection apparatus of Patent Document 1, an electric motor is used as the driving source to drive the conversion piston of the conversion cylinder device when supplying the hydraulic oil to the injection cylinder. In the injection apparatus of Patent Document 1, therefore, the driving force of the electric motor actuates the conversion piston of the conversion cylinder device to supply the hydraulic oil to the injection cylinder device, and then the supplied hydraulic oil actuates the injection piston of the injection cylinder device in the direction in which the molding material is to be injected.

### PRIOR ART DOCUMENT

### PATENT DOCUMENT

Patent Document 1: Japanese Patent Application Laid Open No. 2010-115683

### SUMMARY OF THE INVENTION

### PROBLEM TO BE SOLVED BY THE INVENTION

However, an injection apparatus is generally actuated in three steps: a low-speed step, a high-speed step, and a pressure increasing step. In each of these steps, the injection piston is actuated at a desired speed to apply a desired pressure to a molding material inside a cavity. Therefore, actuating the operating cylinder by the driving force of the electric motor, as in the injection apparatus of Patent Document 1, enables more accurate control of the operating quantity of the injection cylinder than when actuating the operating cylinder by only controlling the flow rate of the hydraulic oil by means of a hydraulic pump or the like. However, since the injection apparatus of Patent Document 1 uses different driving means between the speed control steps and the pressure control step of the above steps, driving means are required for the above control steps respectively. This not only increases the number of parts of the injection apparatus but also makes the structure of the injection apparatus complicated and large.

The present invention was conceived in view of the foregoing problems, and an object of the present invention is to provide an injection apparatus capable of realizing high injection speed and high injection pressure by means of a single unit of driving means.

### MEANS FOR SOLVING THE PROBLEM

In order to solve the above problem, the present invention includes: an injection cylinder that drives an injection plunger to inject a molding material; a first cylinder that is connected to the injection cylinder and feeds hydraulic oil to the injection cylinder and drains hydraulic oil from the injection cylinder; a second cylinder that is connected to the injection cylinder in parallel with the first cylinder and feeds hydraulic oil to the injection cylinder and drains hydraulic oil from the injection cylinder; a single unit of driving means for reciprocatingly driving a piston of the first cylinder and a piston of the second cylinder; a directional control valve that is provided between one end of the injection cylinder and one end of the first cylinder and allows a flow of hydraulic oil from the first cylinder toward the injection cylinder but cuts off the flow of hydraulic oil from the injection cylinder toward the first cylinder; and flow rate adjustment means that is provided between the directional control valve and the first cylinder and that is for adjusting a flow rate of hydraulic oil between the one end of the first cylinder and the one end of the injection cylinder, wherein the driving means drives the piston of the first cylinder and the piston of the second cylinder in synchronization with each other.

### ADVANTAGEOUS EFFECT OF THE INVENTION

The present invention can provide an injection apparatus capable of realizing high injection speed and high injection pressure by means of a single unit of driving means.

### BRIEF DESCRIPTION OF THE DRAWINGS

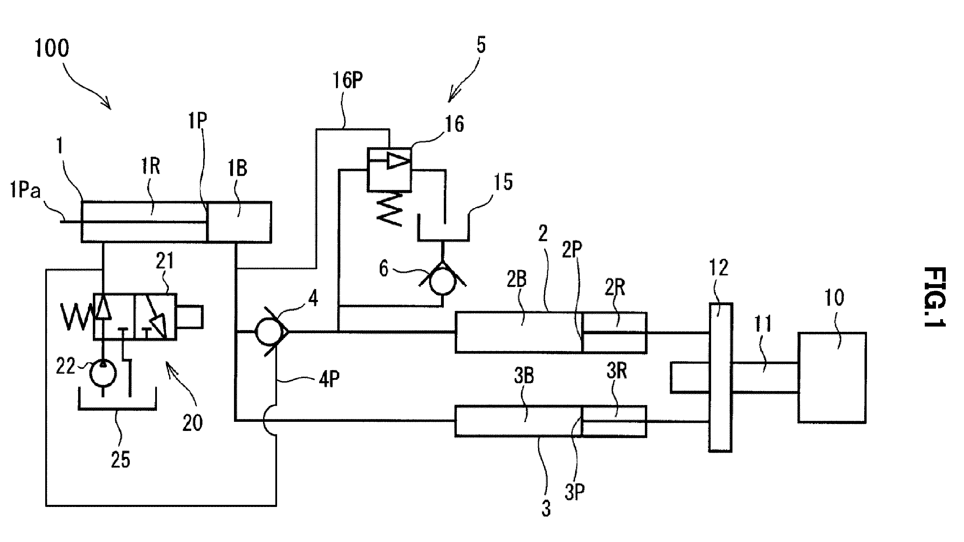

[Fig. 1] This drawing shows a circuit diagram of an injection apparatus of the present invention.

### MODE FOR CARRYING OUT THE INVENTION

An injection apparatus according to an embodiment of the present invention is described hereinafter.

A die-casting machine functioning as an injection apparatus is an apparatus for injecting a metallic material (e.g., aluminum) as a molten molding material into a cavity that is formed by a fixed mold and movable mold configuring a mold, and then filling the cavity with the metallic molding material. The molding material that is injected into the mold is solidified and then demolded, resulting in a desired molded article. Referring to Fig. 1, a die-casting machine 100 includes an injection cylinder 1. The injection cylinder 1 is a cylinder for injection-driving an injection plunger to force, into the cavity, the metallic material that is supplied to an injection sleeve communicated to the cavity. The injection plunger is connected to a tip end of a piston rod 1Pa of a piston 1P in the injection cylinder 1. A acceleration cylinder 2 as the first cylinder and a booster cylinder 3 as the second cylinder, which feed and drain hydraulic oil as an incompressible fluid (fluid), are connected to the injection cylinder 1 via piping. A bottom chamber 2B of the acceleration cylinder 2 is connected to a bottom chamber 1B of the injection cylinder 1. Furthermore, a bottom chamber 3B of the booster cylinder 3 is connected to the bottom chamber 1B of the injection cylinder 1 in parallel with the bottom chamber 2B of the acceleration cylinder 2. In the present embodiment, the stroke of a piston 2P of the acceleration cylinder 2 and the stroke of a piston 3P of the booster cylinder 3 are set at the same length. The diameter D2 of the acceleration cylinder 2 is set to be greater than the diameter D3 of the booster cylinder 3. The piston 2P of the acceleration cylinder 2 is connected to a nut 12 via the rod chamber 2R. The piston 3P of the booster cylinder 3 is connected to the nut 12 via the rod chamber 3R. A ball screw 11 is fitted into the nut 12. The ball screw 11 can freely be rotated by a motor 10. In the present embodiment, a servomotor is used as the motor 10. The ball screw 11 and the nut 12 configure a ball screw mechanism. The nut 12 is configured to move in the right-left direction on Fig. 1 as the ball screw 11 rotates. The piston 2P and the piston 3P can be freely reciprocated in the acceleration cylinder 2 and the booster cylinder 3 respectively by the nut 12. In the present embodiment, the piston 2P and the piston 3P are connected to the nut 12 in such a manner as to synchronously move by the same moving quantity when the nut 12 moves. Further, in the present embodiment, the motor 10, the ball screw 11 and the nut 12 configure a driving means. The driving means in the present embodiment is a single unit.

A pilot operated check valve 4 as a directional control valve is provided on the pipe between the bottom chamber 1B located at one end of the injection cylinder 1 and the bottom chamber 2B located at one end of the acceleration cylinder 2. The pilot operated check valve 4 allows hydraulic oil to flow from the bottom chamber 2B of the acceleration cylinder 2 toward the bottom chamber 1B of the injection cylinder 1. The pilot operated check valve 4 also cuts off the flow of the hydraulic oil from the bottom chamber 1B to the bottom chamber 2B. Note that a pilot conduit 4P is connected to the pilot operated check valve 4 in the present embodiment. The pilot conduit 4P is a conduit for introducing pressure in the pipe, which connects the rod chamber 1R of the injection cylinder 1 to a feed/discharge mechanism 20 (to be described hereinafter), to the pilot operated check valve 4. Thus, when the pilot pressure is applied from the pilot conduit 4P to the pilot operated check valve 4, the pilot operated check valve 4 can be opened to allow the flow of the hydraulic oil from the bottom chamber 1B to the bottom chamber 2B. A flow rate adjustment circuit 5 as the flow rate adjustment means is provided between the pilot operated check valve 4 and the bottom chamber 2B of the acceleration cylinder 2. The flow rate adjustment circuit 5 is provided with a buffer tank 15, a pilot switching valve 16 and a check valve 6. The buffer tank 15 temporarily stores enough hydraulic oil to adjust any excess and deficiency of hydraulic oil in the acceleration cylinder 2. The check valve 6 is provided on a pipe that extends from the buffer tank 15 to the pipe between the pilot operated check valve 4 and the bottom chamber 2B of the acceleration cylinder 2. The check valve 6 cuts off the flow of hydraulic oil from the pipe between the pilot operated check valve 4 and the bottom chamber 2B of the acceleration cylinder 2 to the buffer tank 15. Also, the check valve 6 allows the hydraulic oil to flow from the buffer tank 15 to the pipe between the pilot operated check valve 4 and the bottom chamber 2B of the acceleration cylinder 2. The check valve 6 is a hydraulic oil replenishment control valve for appropriately supplying the hydraulic oil of the buffer tank 15 between the pilot operated check valve 4 and the bottom chamber 2B of the acceleration cylinder 2 when the hydraulic oil between the pilot operated check valve 4 and the bottom chamber 2B of the acceleration cylinder 2 becomes insufficient. The pilot switching valve 16 is provided on a pipe that extends from the pipe between the pilot operated check valve 4 and the bottom chamber 2B of the acceleration cylinder 2 to the buffer tank 15. The pilot switching valve 16 is a valve for switching between a communicated state and a cut off state of the flow of hydraulic oil from the pipe between the pilot operated check valve 4 and the bottom chamber 2B of the acceleration cylinder 2 to the buffer tank 15. The pilot switching valve 16 is normally biased to its cut off position by a spring. A pilot conduit 16P is connected to the pilot switching valve 16. The pilot conduit 16P is a conduit for introducing, to the pilot switching valve 16, pressure in the pipe located between the bottom chamber 1B of the injection cylinder 1 and the pilot operated check valve 4 and bottom chamber 3B of the booster cylinder 3. The pilot switching valve 16 is switched when the pilot pressure introduced from the pilot conduit 16P becomes greater than the biasing force of the spring. The pilot switching valve 16 discharges the hydraulic oil to the buffer tank 15 when switched to the communicated state. In the present embodiment, the pilot pressure is set at a value smaller than the maximum pressure that can be applied by the acceleration cylinder 2 and the booster cylinder 3.

The feed/discharge mechanism 20 is connected to the rod chamber 1R of the injection cylinder 1. The feed/discharge mechanism 20 is a hydraulic circuit for feeding the hydraulic oil to the rod chamber 1R and discharging the hydraulic oil from the rod chamber 1R. The feed/discharge mechanism 20 is configured by an electromagnetic switching valve 21, a hydraulic pump 22, and a hydraulic oil tank 25. The electromagnetic switching valve 21 switches the condition of the pipe connecting the rod chamber 1R of the injection cylinder 1 and the hydraulic oil tank 25 to each other. The hydraulic pump 22 is provided on the pipe between the electromagnetic switching valve 21 and the hydraulic oil tank 25. The hydraulic pump 22 is a pump for supplying the hydraulic oil in the hydraulic oil tank 25 to the rod chamber 1R of the injection cylinder 1.

The actions of the present embodiment are described next.

The injection apparatus 100 drives the injection cylinder 1 in order to inject a molding material by means of the injection plunger. In so doing, the injection apparatus 100 supplies the hydraulic oil to the bottom chamber 1B of the injection cylinder 1 in order to expand the bottom chamber 1B by moving the piston 1P of the injection cylinder 1. The injection apparatus 100 first drives the motor 10 to rotate the ball screw 11. Consequently, the nut 12 fitted onto the ball screw 11 is moved toward the left side on Fig. 1, more specifically, is moved to approach the acceleration cylinder 2 and the booster cylinder 3. When the nut 12 is moved, the pistons 2P and 3P connected to the nut 12 are moved within the acceleration cylinder 2 and booster cylinder 3, respectively. The pistons 2P and 3P are driven in synchronization with each other and moved an equal distance. When the piston 2P is moved in acceleration cylinder 2, the hydraulic oil in the bottom chamber 2B of the acceleration cylinder 2 is supplied toward the injection cylinder 1. The hydraulic oil discharged from the bottom chamber 2B passes through the pilot operated check valve 4 and flows to the bottom chamber 1B of the injection cylinder 1. At this moment, the hydraulic oil discharged from the bottom chamber 2B does not flow to the flow rate adjustment circuit 5. In the flow rate adjustment circuit 5, the pilot switching valve 16 is biased to its cut off position by the spring. In addition, the check valve 6 cuts off the flow of the hydraulic oil from the bottom chamber 2B to the buffer tank 15. When the piston 3P is moved in the booster cylinder 3, the hydraulic oil in the bottom chamber 3B of the booster cylinder 3 is supplied toward the injection cylinder 1. The hydraulic oil discharged from the bottom chamber 3B flows to the bottom chamber 1B of the injection cylinder 1 together with the hydraulic oil discharged from the bottom chamber 2B of the acceleration cylinder 2. Here, the feed/discharge mechanism 20 causes the electromagnetic switching valve 21 to communicate the rod chamber 1R with the hydraulic oil tank 25 so that the hydraulic oil in the rod chamber 1R can be discharged to the hydraulic oil tank 25. In the injection cylinder 1, the hydraulic oil is supplied from both the acceleration cylinder 2 and the booster cylinder 3 to the bottom chamber 1B, and the hydraulic oil of the rod chamber 1R is discharged to the hydraulic oil tank 25, thereby moving the piston 1P at high speed. As a result, the injection plunger is injection-driven at high speed.

The cavity becomes filled with the molding material as the injection of the molding material at high speed is implemented by the injection cylinder 1 and the injection plunger. Once the cavity becomes filled with the molding material, resistance against the direction in which the piston 1P moves occurs in the injection plunger and the injection cylinder 1. Consequently, the pressure of the hydraulic oil in the bottom chamber 1B of the injection cylinder 1 is increased by the hydraulic oil supplied from the acceleration cylinder 2 and the booster cylinder 3. The injection apparatus 100 continues to drive the motor 10 to continuously supply the injection cylinder 1 with the hydraulic oil from the acceleration cylinder 2 and the booster cylinder 3. The pressure within the pilot conduit 16P is increased as the pressure within the bottom chamber 1B is increased. When the pressure within the pilot conduit 16P exceeds a predetermined value, the pilot switching valve 16 switches from the cut off position to the communicating position. Then, the hydraulic oil discharged from the bottom chamber 2B of the acceleration cylinder 2 is caused to flow and discharged to the buffer tank 15 via the pilot switching valve 16, because the pressure of the hydraulic oil between the bottom chamber 1B of the injection cylinder 1 and the pilot operated check valve 4 becomes higher than the buffer tank 15. On the other hand, the hydraulic oil supplied from the bottom chamber 3B of the booster cylinder 3 pressurizes the hydraulic oil within the bottom chamber 1B of the injection cylinder 1. The molding material within the cavity therefore continues to be pressurized. Moreover, the hydraulic oil supplied from the bottom chamber 3B is prevented by the pilot operated check valve 4 from flowing to the buffer tank 15. In the injection cylinder 1, when the pressure within the bottom chamber 1B becomes equal to or greater than the pilot pressure of the pilot switching valve 16, only the hydraulic oil of the booster cylinder 3 is supplied to the bottom chamber 1B. This makes the supply of hydraulic oil thereto lower than when the hydraulic oil is supplied from the acceleration cylinder 2 and the booster cylinder 3. In the injection cylinder 1, high pressure is applied to the piston 1P by the hydraulic oil from the booster cylinder 3. The injection cylinder 1 and injection plunger then gradually apply pressure into the cavity. Consequently, the pressure within the cavity is increased. This pressure increasing step pressurizes and forms the molding material in the cavity.

The resistance applied from the cavity to the injection plunger and injection cylinder 1 increases as the injection plunger and injection cylinder 1 use the hydraulic oil from the booster cylinder 3 to increase the pressure within the cavity. Consequently, the resistance is transmitted from the bottom chamber 1B of the injection cylinder 1 to the booster cylinder 3 and acts as a load resistance onto the motor 10 via the nut 12 and the ball screw 11. A load torque of the motor 10 is monitored in the injection apparatus 100. When the load torque of the motor 10 becomes equal to or greater than a predetermined value, it is determined that the process of filling the cavity with the molding material is completed. Further, the injection apparatus 100 continues to drive the motor 10 to continuously apply pressure to the molding material in the cavity with a predetermined torque. Thereafter, when the molding material becomes solidified, the injection apparatus 100 stops the motor 10. After the molding material has solidified, the injection apparatus 100 determines that the molding process is completed. Further, the injection apparatus 100 then takes out the molded article. At this moment, when separating the movable mold from the fixed mold, the injection apparatus 100 drives the motor 10 to apply a load to a part of the molded article in order to push the molded article out of the fixed mold. The molded article is demolded from the fixed mold in this manner.

Next, the injection apparatus 100 drives the motor 10 to rotate reversely. The injection apparatus 100 then retracts the injection plunger and the injection cylinder 1. As a result of reversely rotating the motor 10, the piston 2P of the acceleration cylinder 2 and the piston 3P of the booster cylinder 3 are moved in the opposite direction by the ball screw 11 and the nut 12. Consequently, in the acceleration cylinder 2, the rod chamber 2R is reduced in size and the bottom chamber 2B is increased. At the same time, in the booster cylinder 3, the rod chamber 3R is reduced in size and the bottom chamber 3B is increased. The injection apparatus 100 drives the hydraulic pump 22 of the feed/discharge mechanism 20 to pour hydraulic oil into the rod chamber 1R of the injection cylinder 1. When the hydraulic oil is supplied to the rod chamber 1R and the bottom chambers 2B and 3B of the acceleration cylinder 2 and booster cylinder 3 are increased in size, the hydraulic oil flows out of the bottom chamber 1B of the injection cylinder 1. At this moment, the pilot operated check valve 4 is opened in response to the application of the pilot pressure through the pilot conduit 4P, allowing the hydraulic oil to flow from the bottom chamber 1B to the bottom chamber 2B. As a result, the amount of hydraulic oil in the rod chamber 1R of the injection cylinder 1 is increased, while the amount of hydraulic oil in the bottom chamber 1B is decreased, thereby moving the piston 1P. Subsequently, the injection cylinder 1 and the injection plunger are retracted. Once the injection plunger and the injection cylinder 1 are retracted to predetermined positions, the hydraulic oil no longer flows out of the bottom chamber 1B of the injection cylinder 1. At this moment, the piston 2P of the acceleration cylinder 2 and the piston 3P of the booster cylinder 3 are not yet returned to predetermined positions and therefore continue to return to the predetermined positions. The shortage of hydraulic oil which occurs due to the size increase of the bottom chambers 2B and 3B is replenished with the hydraulic oil from the buffer tank 15 via the check valve 6. Once the piston 2P of the acceleration cylinder 2 and the piston 3P of the booster cylinder 3 are retracted to the predetermined positions, one cycle of injection molding is ended.

The injection apparatus 100 of the present embodiment has the following effects.
(1) In the injection apparatus 100 of the present embodiment, the acceleration cylinder 2 and the booster cylinder 3 are disposed in parallel with each other with respect to the injection cylinder 1. The acceleration cylinder 2 and the booster cylinder 3 are driven synchronously by the motor 10, the ball screw 11 and the nut 12. Thus, the driving means comprising the single motor 10, ball screw 11 and nut 12 can realize high injection speed and injection pressure.
(2) The driving means of the injection apparatus 100 is a single structure comprising the motor 10, the ball screw 11 and the nut 12. Compared to a construction in which the acceleration cylinder 2 and the booster cylinder 3 are driven by a plurality of driving means, the construction of the present embodiment can reduce the number of parts and the cost of the injection apparatus 100. In addition, since only the single-structured driving means need be provided in the injection apparatus 100, reduction in the space for and the size of the injection apparatus 100 can be accomplished.
(3) The injection apparatus 100 is provided with the flow rate adjustment circuit 5. The flow of the hydraulic oil in the acceleration cylinder 2 can be easily switched by the flow rate adjustment circuit 5.
(4) The flow rate adjustment circuit 5 comprises the buffer tank 15, the check valve 6 and the pilot switching valve 16. The pilot switching valve 16 can be freely switched by means of the pilot pressure. Therefore, it is not necessary to provide the flow rate adjustment circuit 5 with new driving means, providing a simple structure of the flow rate adjustment circuit 5.
(5) The diameter D2 of the acceleration cylinder 2 is set to be greater than the diameter D3 of the booster cylinder 3. Therefore, when driving the injection cylinder 1, high-speed drive of the injection cylinder 1 can be accomplished by supplying a larger amount of hydraulic oil by using the piston 2P of the acceleration cylinder 2 with the larger diameter D2. In addition, the diameter D3 of the booster cylinder 3 for applying a necessary pressure to the injection cylinder 1 by means of the booster cylinder 3 can be set without consideration of the diameter D2 of the acceleration cylinder 2.

The present invention is not limited to the foregoing embodiment. Modifications of the present invention are described hereinbelow.
- The acceleration cylinder 2 and the booster cylinder 3 according to the embodiment employ different diameters and the same manner stroke but are not limited to such construction. The size of each cylinder can be changed as appropriate. For instance, the diameter D2 of the acceleration cylinder 2 and the diameter D3 of the booster cylinder 3 may be equal to each other. The diameter D2 may be smaller than the diameter D3. It is preferred that the diameters of the pistons 2P and 3P be set appropriately in accordance with the diameter D1 of the piston 1P of the injection cylinder 1.
- The flow rate adjustment circuit 5 is not limited to the construction described in the embodiment. For example, an electromagnetic switching valve may be used in place of the pilot switching valve 16. Further, the above construction may have a construction where the position of the injection cylinder 1 is detected with a limit switch or the like and the switching valve is switched at a predetermined position of the injection cylinder 1. Furthermore, the above construction may have a construction where an encoder or the like is provided in the motor 10 and the switching valve is switched based on the driving amount of the motor 10 or the like. Also, a switching valve may be used in place of the check valve 6. Further, a hydraulic pump, etc., may be provided to adjust the flow rate of the hydraulic oil.
- The driving means according to the embodiment is not limited to the structure of a ball screw. The construction of the driving means may be changed as appropriate as long as it can synchronously drive the piston 2P of the acceleration cylinder 2 and the piston 3P of the booster cylinder 3 by means of the motor 10.
- The rod chamber 1R of the injection cylinder 1, the rod chamber 2R of the acceleration cylinder 2 and the rod chamber 3R of the booster cylinder 3 may be configured so that hydraulic oil is fed into and discharged from their interiors.

### EXPLANATION OF REFERENCE NUMERALS

1 Injection cylinder, 1B Bottom chamber, 1P Piston, 1Pa Piston rod, 1R Rod chamber, 2 Acceleration cylinder, 2B Bottom chamber, 2P Piston, 2R Rod chamber, 3 Booster cylinder, 3B Bottom chamber, 3P Piston, 3R Rod chamber, 4 Pilot operated check valve, 4P Pilot conduit, 5 Flow rate adjustment circuit, 6 Check valve, 10 Motor, 11 Ball screw, 12 Nut, 15 Buffer tank, 16 Pilot switching valve, 16P Pilot conduit, 100 Die-casting machine (injection apparatus).

## Claims

1. An injection apparatus (100) including an injection cylinder (1) driving an injection plunger to inject a molding material, **characterized in that** the injection apparatus (100) comprises:
a first cylinder (2) connected to the injection cylinder (1), the first cylinder feeding hydraulic oil to the injection cylinder and draining hydraulic oil therefrom;
a second cylinder (3) connected to the injection cylinder (1) in parallel with the first cylinder (2), the second cylinder feeding hydraulic oil to the injection cylinder and draining hydraulic oil therefrom;
a single unit of driving means (10, 11, 12) for reciprocatingly driving a piston (2P) of the first cylinder (2) and a piston (3P) of the second cylinder (3);
a directional control valve (4) provided between one end (1B) of the injection cylinder (1) and one end (2B) of the first cylinder (2), the directional control valve allowing a flow of hydraulic oil from the first cylinder toward the injection cylinder but cutting off the flow of hydraulic oil from the injection cylinder toward the first cylinder;
flow rate adjustment means (5) provided between the directional control valve (4) and the first cylinder (2), the flow rate adjustment means being for adjusting a flow rate of hydraulic oil between the one end (2B) of the first cylinder (2) and the one end (1B) of the injection cylinder (1), and
wherein the driving means (10, 11, 12) drives the piston (2P) of the first cylinder (2) and the piston (3P) of the second cylinder (3) in synchronization with each other.

2. The injection apparatus (100) according to claim 1, **characterized in that** the flow rate adjustment means (5) includes:
a buffer tank (15) capable of temporarily storing hydraulic oil;
a pilot switching valve (16) capable of discharging to the buffer tank (15) the hydraulic oil present between the directional control valve (4) and the first cylinder (2); and
a replenishment control valve (6) supplying the hydraulic oil in the buffer tank (15) between the directional control valve (4) and the first cylinder (2) when there is insufficient hydraulic oil between the directional control valve and the first cylinder.

3. The injection apparatus (100) according to claim 1 or 2, **characterized in that** a cylinder diameter of the first cylinder (2) is greater than that of the second cylinder (3).

## Patentansprüche

1. Eine Injektionsvorrichtung (100) mit einem Injektionszylinder (1) der einen Injektionskolben antreibt, um ein Formmaterial einzuspritzen, **dadurch gekennzeichnet, dass** die Injektionsvorrichtung (100) umfasst:
einen mit dem Injektionszylinder (1) verbundenen ersten Zylinder (2), wobei der erste Zylinder Hydrauliköl zu dem Injektionszylinder zuführt und Hydrauliköl daraus ablässt;
einen parallel zu dem ersten Zylinder (2) mit dem Injektionszylinder (1) verbundenen zweiten Zylinder (3), wobei der zweite Zylinder Hydrauliköl zu den Injektionszylinder zuführt und Hydrauliköl daraus ablässt;
eine einzelne Einheit von Antriebsmitteln (10, 11, 12) zum hin- und herbewegenden Antrieb eines Kolbens (2P) des ersten Zylinders (2) und eines Kolbens (3P) des zweiten Zylinders (3);
ein Richtungssteuerventil (4), das zwischen einem Ende (1b) des Injektionszylinders (1) und einem Ende (2B) des ersten Zylinders (2) vorgesehen ist, wobei das Richtungssteuerventil einen Fluss von Hydrauliköl von dem ersten Zylinder in Richtung auf den Injektionszylinder zulässt aber den Fluss von Hydrauliköl von dem Injektionszylinder in Richtung auf den ersten Zylinder unterbricht;
Flussrateneinstellmittel (5), die zwischen dem Richtungssteuerventil (4) und dem ersten Zylinder (2) vorgesehen sind, wobei die Flussrateneinstellmittel für das Einstellen einer Flussrate des Hydrauliköls zwischen dem einen Ende (2B) des ersten Zylinders (2) und dem einen Ende (1b) des Injektionszylinders (1) sind; und
wobei das Antriebsmittel (10, 11, 12) den Kolben (2P) des ersten Zylinders (2) und den Kolben (3P) des zweiten Zylinders (3) in Synchronisation miteinander antreibt.

2. Die Injektionsvorrichtung (100) nach Anspruch 1, **dadurch gekennzeichnet, dass** Flussrateneinstellmittel (5) aufweist:
einen Puffertank (15), der vorübergehend Hydrauliköl speichern kann;
ein Pilot-Schaltventil (16), das in der Lage ist, das zwischen dem Richtungssteuerventil (4) und dem ersten Zylinder (2) vorhandene Hydrauliköl in den Puffertank (15) abzulassen; und
ein Nachfüllsteuerventil (6), das das Hydrauliköl in dem Puffertank (15) zwischen das Richtungssteuerventil (4) und den ersten Zylinder (2) zuführt, wenn zwischen dem Richtungssteuerventil (4) und dem ersten Zylinder (2) unzureichend Hydrauliköl vorhanden ist.

3. Die Injektionsvorrichtung nach Anspruch 1 oder 2, **dadurch gekennzeichnet, dass** ein Zylinderdurchmesser des ersten Zylinders (2) größer ist als der des zweiten Zylinders (3).

## Revendications

1. Appareil d'injection (100) comprenant un cylindre d'injection (1) entraînant un piston plongeur d'injection pour injecter un matériau de moulage, **caractérisé en ce que** l'appareil d'injection (100) comprend :
un premier cylindre (2) raccordé au cylindre d'injection (1), le premier cylindre amenant l'huile hydraulique au cylindre d'injection et évacuant l'huile hydraulique à partir de ce dernier ;
un second cylindre (3) raccordé au cylindre d'injection (1) en parallèle avec le premier cylindre (2), le second cylindre amenant l'huile hydraulique au cylindre d'injection et évacuant l'huile hydraulique à partir de ce dernier ;
une unité unique de moyens d'entraînement (10, 11, 12) pour entraîner selon un mouvement de va-et-vient un piston (2P) du premier cylindre (2) et un piston (3P) du second cylindre (3) ;
une soupape de commande directionnelle (4) prévue entre une extrémité (1B) du cylindre d'injection (1) et une extrémité (2B) du premier cylindre (2), la soupape de commande directionnelle permettant un écoulement de l'huile hydraulique du premier cylindre vers le cylindre d'injection mais arrêtant d'écoulement l'huile hydraulique du cylindre d'injection vers le premier cylindre ;
des moyens d'ajustement de débit (5) prévus entre la soupape de commande directionnelle (4) et le premier cylindre (2), les moyens d'ajustement de débit étant prévus pour ajuster un débit de l'huile hydraulique entre la une extrémité (2B) du premier cylindre (2) et la une extrémité (1B) du cylindre d'injection (1), et
dans lequel les moyens d'entraînement (10, 11, 12) entraînent le piston (2P) du premier cylindre (2) et le piston (3P) du second cylindre (3) en synchronisation entre eux.

2. Appareil d'injection (100) selon la revendication 1, **caractérisé en ce que** les moyens d'ajustement de débit (5) comprennent :
un réservoir tampon (15) pouvant stocker temporairement l'huile hydraulique ;
une soupape de commutation pilote (16) pouvant décharger dans le réservoir tampon (15), l'huile hydraulique présente entre la soupape de commande directionnelle (4) et le premier cylindre (2) ; et
une soupape de commande de réapprovisionnement (6) amenant l'huile hydraulique dans le réservoir tampon (15) entre la soupape de commande directionnelle (4) et le premier cylindre (2) lorsqu'il n'y a pas assez d'huile hydraulique entre la soupape de commande directionnelle et le premier cylindre.

3. Appareil d'injection (100) selon la revendication 1 ou 2, **caractérisé en ce qu'**un diamètre de cylindre du premier cylindre (2) est supérieur à celui du second cylindre (3).
